# EUROPÄISCHE PATENTSCHRIFT

(11) **EP 1 396 916 B1**
(45) Veröffentlichungstag und Bekanntmachung des Hinweises auf die Patenterteilung: **27.08.2008**
(21) Anmeldenummer: 03019791.7
(22) Anmeldetag: 30.08.2003
(51) Int. Cl.: H02G 3/04

(54) **Schutzschlauch-Anordnung für innenverlegte Leitungen im Flugzeug**
Protective hose for accommodating cables arranged inside an aircraft
Tuyau flexible de protection de câbles disposé à l'intérieur d'un aéronef

(30) Priorität: 07.09.2002 DE 10241573
(43) Veröffentlichungstag der Anmeldung: 10.03.2004
(73) Patentinhaber: Airbus Deutschland GmbH, 21129 Hamburg (DE)
(72) Erfinder: Borchers, Klaus-Hinrich, Dipl.-Ing., 27446 Selsingen (DE)
(74) Vertreter: Hansmann, Dierk

(56) Entgegenhaltungen:
- EP-A- 0 382 916
- US-A- 1 821 234
- US-A- 4 202 520

## Beschreibung

Die Erfindung bezieht sich auf eine Schutzschlauch-Anordnung für innenverlegte isolierte elektrische Leitungen in einem Flugzeug. Mit ihr wird eine definierte Routentrennung von im Schutzschlauch verlegten Signal- oder Steuerleitungen sowie energieübertragenden Leitungen umgesetzt, die es erlaubt, mehrere Leitungen platzsparend in einem Flugzeug anzuordnen, wodurch in der Hauptsache der Aufwand für Reparaturarbeiten (im Störungsfall) als auch für turnusmäßige Instandhaltungs- und Überwachungsarbeiten an der elektrischen Installation eines Flugzeuges gesenkt wird.

Die Verlegung von isolierten elektrischen Leitungen in einem Schutzschlauch ist eine von mehreren Möglichkeiten, um diese Leitungen einerseits wirksam gegen äußere mechanische Einwirkungen, beispielsweise durch übertragene Vibrationen und damit verursachter Scheuerwirkung, und / oder gegen sonstige Einwirkungen, beispielsweise gegen eindringende Feuchtigkeit, und andererseits gegen den Einfluss äußerer elektromagnetischer Störungen und / oder sonstiger Einflüsse elektrischer Beeinflussungen im Flugzeuginneren zu schützen. Diese Installationstechnologie wird bei allen Flugzeugtypen der Firma Airbus umgesetzt. In diesen Verkehrsflugzeugen wird eine routenaufgeteilte Leitungsverlegung vorgenommen, wonach die Leitungen der betreffenden Route zur Ansteuerung oder Informationsversorgung einzelner Flugzeuggeräte respektive -systeme oder zur Energieversorgung und -bereitstellung für deren Funktion genutzt werden. Aufgrund der Vielzahl von derartigen Routen wird diese geschützt ausgeführte Verlegung von isolierten elektrischen Leitungen oder Leitungsbündeln, die auf engstem Raum (beispielsweise in Schutzschläuchen) an die entsprechende Gerätetechnik geführt werden, für das Wartungs- und Instandhaltungspersonal unübersichtlich. Oftmals besteht deshalb auch die Notwendigkeit, dass es bei der Ausführung der Installation von im Schutzschlauch verlegten Leitungen und / oder Leitungsbündeln in Flugzeug-Teilbereichen, deren räumliches Umfeld eben sehr begrenzt ist, erforderlich wird, verschiedene Leitungsrouten montagebedingt zusammenzuführen bzw. über- und / oder nebeneinander (parallelgeführt) zu verlegen. Dieser Umstand erfordert eine Bündelung der Schutzschläuche, die man mit einer im Abstand vorgenommenen Befestigung von mehreren Schutzschläuchen mittels einem Kabelbinder oder einem an der Flugzeugstruktur befestigten Halter realisiert. Dem Betrachter wird also im Flugzeug ein teilweise vorhandenes unübersichtliches Bild der im Schutzschlauch ausgeführten Leitungsinstallation geboten, das einem sachkundigen Fachmann mit seinem geübtem Blick kaum oder nur schwerlich eine Sortierung nach Leitungsrouten gestattet. Dadurch wird der Aufwand für Reparaturarbeiten (im Störungsfall) als auch für turnusmäßige Instandhaltungs- und Überwachungsarbeiten an der elektrischen Installation eines Flugzeuges erheblich erschwert. Eine platzsparende Verlegung mehrerer Leitungen mit Hilfe eines winkelförmig ausgebildeten Abstandsteiles in einem Flugzeug ist nicht bekannt.

Ferner beschreibt die US-A 1,821,234 eine Schutzschlauch-Anordnung für innenverlegte Leitungen, bestehend aus einer Kombination von mehreren parallel angeordneten Schutzschläuchen, deren Querschnitt zur Aufnahme von isolierten elektrischen Leitungen vorgesehen ist. Diese Anordnung umfasst ein Abstandsteil, dass zwischen zwei nebeneinander gelegenen Schutzschläuchen positioniert und den gegenüberstehenden außenliegenden Schutzschlauch-Oberflächenabschnitten dieser Schutzschläuche angeformt ist.

Eine ähnlich Anordnung wird durch die EP 0 382 916 A2 offenbart. Diese Anordnung, die als Rohraggregat bezeichnet wird, umfasst mehrere Rohrbündel aus stranggepressten Kunststoffrohren, die für die Aufnahme von im Erdreich verlegten Kabeln geeignet ist. Die auseinander liegenden Rohre werden jeweils mit einem Abstandssteg auf Abstand gehalten, die ihrerseits Löcher oder Schlitze aufweisen. Der Abstandssteg ist bei parallel verlegten Rohren zwischen zwei nebeneinander gelegenen Rohren positioniert und den gegenüberstehenden außenliegenden Rohr-Oberflächenabschnitten dieser Rohre angeformt ist.

Außerdem bezieht sich die US-A 4,202,520 auf eine modulare Tragvorrichtung für Rohre, welche dreiecksförmige Tragelemente umfasst, die zwischen den Rohren angeordnet sind.

Aus keiner dieser Druckschriften wird man eine abgewinkelte Ausbildung eines quaderförmigen Abstandsteils entnehmen können.

Demzufolge liegt der Erfindung die Aufgabe zugrunde, eine gattungsgemäße Schutzschlauch-Anordnung derart zu verbessern, dass mit ihr eine definierte Routentrennung von im Schutzschlauch verlegten Signal- oder Steuerleitungen sowie elektroenergieübertragenden Leitungen umgesetzt wird, die es erlaubt, mehrere Leitungen platzsparend in einem Flugzeug anzuordnen, wodurch in der Hauptsache der Aufwand für Reparaturarbeiten (im Störungsfall) als auch für turnusmäßige Instandhaltungs- und Überwachungsarbeiten an der elektrischen Installation eines Flugzeuges gesenkt wird.

Diese Aufgabe wird durch die Maßnahmen des Anspruchs 1 gelöst. In den weiteren abhängigen Ansprüchen werden zweckmäßige Ausgestaltungen und Weiterbildungen dieser Maßnahmen angegeben.

Die Erfindung ist in einem Ausführungsbeispiel anhand der Zeichnungen näher beschrieben. Es zeigen
- Fig. 1: die Anordnung von zwei parallel verlegten und übereinander (vertikal) angeordneten Schutzschläuchen, die einem Abstandsteil angeformt sind, in einer Vorderansicht;
- Fig. 2: die Anordnung von (andeutungsweise) mehreren parallel verlegten und übereinander (vertikal) angeordneten Schutzschläuchen, wobei den nebeneinander gelegenen Schutzschläuchen ein Abstandsteil angeformt ist, in einer Vorderansicht;
- Fig. 3: die Anordnung von zwei parallel verlegten und nebeneinander (horizontal) angeordneten Schutzschläuchen mit hervorgehobener Darstellung der konkav gewölbten Mantelflächen des Abstandteiles nach der Fig. 4;
- Fig. 4: die Darstellung eines quaderförmigen Abstandteiles, dessen sich gegenüber stehenden Mantelflächen konkav gewölbt sind;
- Fig. 5: die Darstellung eines quaderförmigen Abstandteiles, dessen sich Grund und Deckfläche konkav gewölbt sind;
- Fig. 6: die Darstellung von (andeutungsweise) mehreren übereinander (vertikal) angeordneten Schutzschläuchen - in einer Seitenansicht;
- Fig. 7: die Darstellung eines quaderförmigen Abstandsteils mit Angaben hinsichtlich der Quader-Kantenlänge und - Kantenbreite dieses Körpers;
- Fig. 7a: die Darstellung eines (recht)winkligen Abstandteiles;
- Fig. 8: die Darstellung eines U-förmigen Abstandteiles, dessen Schenkel seitwärts geneigt abgewinkelt sind;
- Fig. 9: die Darstellung nach der Fig. 1 mit zwei verschiedenen Schutzschläuchen und einem mehrere Aussparungen aufweisenden Abstandteil - in einer Seitenansicht;
- Fig. 10: die Darstellung nach der Fig. 9 - in einer Vorderansicht;
- Fig. 11: die Darstellung nach der Fig. 9 mit zwei gleichartigen Schutzschläuchen - in einer Seitenansicht;
- Fig. 12: die Darstellung nach der Fig. 11 - in einer Vorderansicht.

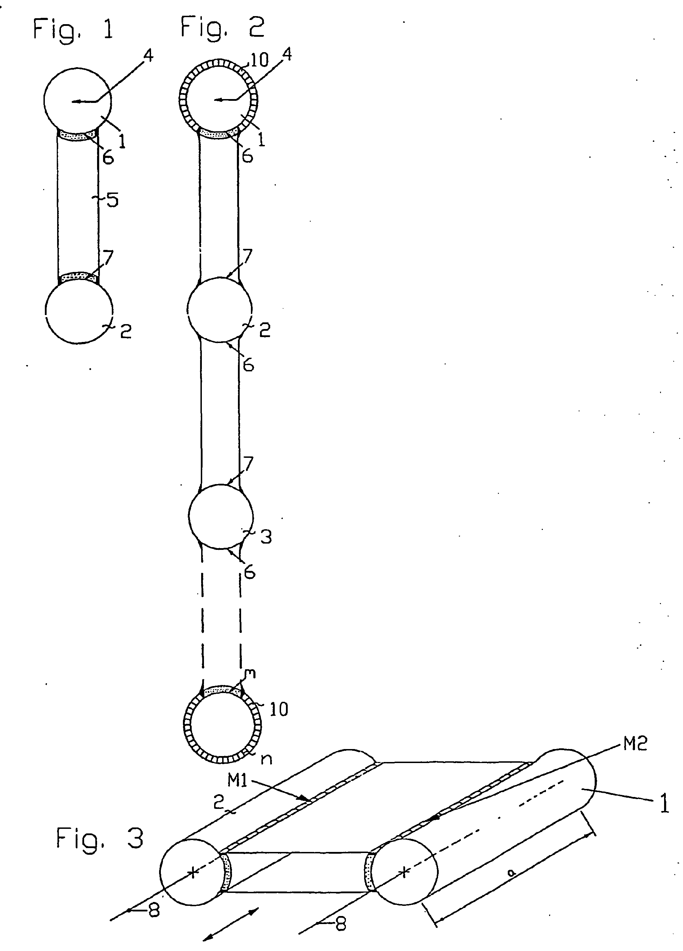

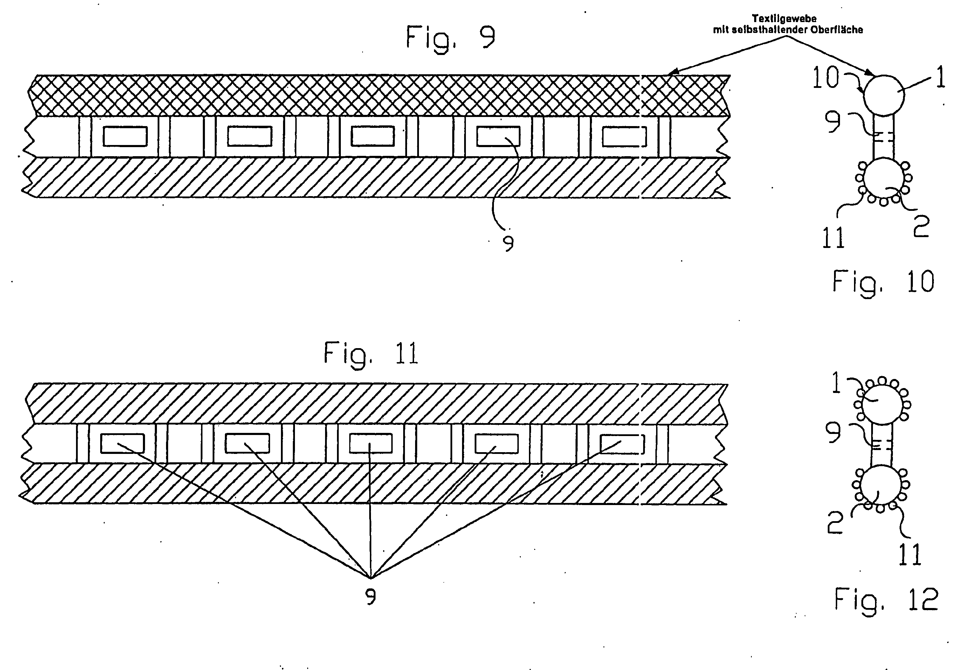

Der grundsätzliche Aufbau der Schutzschlauch-Anordnung wird anhand der Fig. 1 erläutert. Aus dieser Darstellung ist eine Vorderansicht von zwei parallel verlegten Schutzschläuchen, einem ersten und einem zweiten Schutzschlauch 1, 2 mit einem gleichen Schlauch-Durchmesser, ersichtlich, die übereinander (also vertikal) angeordnet sind. Diesen beiden Schutzschläuchen, die als Kunststoffschlauch ausgeführt sind und aus einem gleichen Schlauch-Material bestehen, ist ein Abstandsteil 5 gleicher Materialart angeformt. In der Regel wird ein PTFE-Schlauch nach der Vorschrift: "NSA935805" verwendet, der - wie in den Figuren 10 und 12 deutlich(er) erkennbaraußenumfängliche Erhöhungen 11 (rohrformähnlicher Gestalt) aufweist, die nebeneinander liegen und aufgrund der furchenartigen Vertiefung zwischen diesen Erhöhungen 11 ein schraubenartig gewundenes Erscheinungsbild abgeben. Es wird bereits eingangs erwähnt, dass diese Schutzschläuche zur Aufnahme von isolierten elektrischen Leitungen 4 oder Leitungsbündeln vorgesehen sind, worauf nicht näher eingegangen wird.

Das Abstandteil 5, das nach der Fig. 1 zwischen dem ersten und zweiten Schutzschlauch 1, 2 angeordnet ist, wird immer zwischen zwei nebeneinander gelegenen Schutzschläuchen 1, 2, 3, n positioniert. Es ist den sich gegenüberstehenden außenliegenden Schutzschlauch-Oberflächenabschnitten 6, 7 des ersten und zweiten Schutzschlauches 1, 2 fest angeformt, worauf hinsichtlich der Fig. 3 noch näher eingegangen wird.

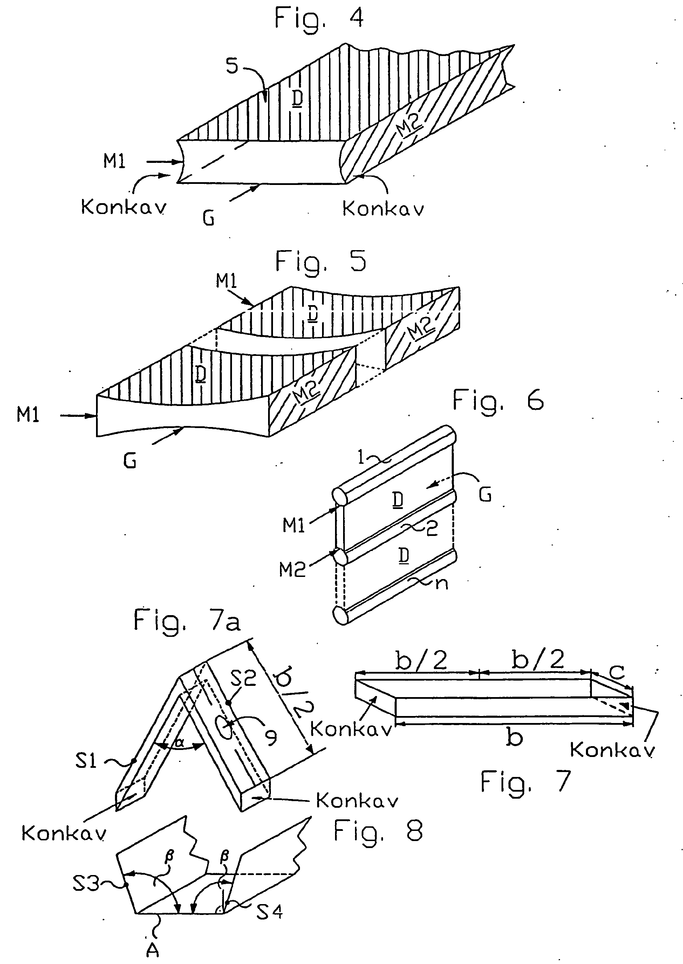

In der Fig. 2 wird nun die Vorderansicht einer Schutzschlauch-Anordnung von drei parallel verlegten und übereinander (vertikal) angeordneten Schutzschläuchen 1, 2, 3 gezeigt, die, wie andeutungsweise gestrichelt dargestellt, sich bis zu einem n-ten Schutzschlauch n von nebeneinander gelegenen Schutzschläuchen 1 bis n (beliebiger Anzahl) erweitern lässt. Eine ähnliche Schutzschlauch-Anordnung mit 2 Schutzschläuchen 1, 2, die (wie gestrichelt angedeutet) sich beliebig mit weiteren übereinander (vertikal) angeordneten Schutzschläuchen erweitern lässt und mit einem n-ten Schutzschlauch n abschließen kann, wird in einer Seitenansicht nach der Fig. 6 dargestellt. Zurückkommend auf die Fig. 2 lässt sich aus letzterer entnehmen, dass nach dem Vorbild der Fig. 1 jeweils zwischen zwei nebeneinander und parallel verlegten Schutzschläuchen 1, 2 das Abstandsteil 5 angeordnet ist, das mit einem Blick auf die Figuren 3 und 4, eine quaderförmige Körperform besitzt. Die Mantelflächenbereiche M1, M2 dieses Abstandteiles 5 sind konkav gewölbt ausgebildet, welche (nach dem Vorbild dieser Figuren 3 und 4) einen Teilbereich des quaderseitlich befindlichen Oberflächenbereiches darstellen und (nach dem Vorbild der Fig. 3) über eine gestreckte Schutzschlauchlänge a an den sich gegenüberstehenden Schutzschlauch-Oberflächenabschnitten 6, 7, m der Schutzschläuche 1 bis n fest angeformt sind. Andererseits kann vorgesehen werden, dass mehrere Abstandteile 5 der (am Beispiel eines einzelnen Abstandteiles 5) beschriebenen Körperform entlang dieser Schutzschlauchlänge a im definierten Abstand an den sich gegenüberstehenden Schutzschlauch-Oberflächenabschnitten 6, 7 fest angeformt sind, wobei diese Ausführung in keiner der beigegebenen Figuren dargestellt wird. Es bleibt nicht unerwähnt, dass vorgesehen wird, dem nicht angeformten außenliegenden Schutzschlauch-Oberflächenabschnitt des ersten und / oder n-ten Schutzschlauches 1, n eine Folie oder aber ein Gewebe 10 zu befestigen, welche einseitig klebend und selbsthaltend ausgebildet sind. Diese Folie oder das Gewebe 10 wird wegen eines besseren mechanischen Schlauchschutzes eingesetzt.

Zurückkommend auf die Fig. 3 wird den bisherigen Ausführungen ergänzt, dass diese Schutzschlauch-Anordnung mit den beiden parallel verlegten und nebeneinander angeordneten Schutzschläuchen, einem ersten Schutzschlauch 1 und einen zweiten Schutzschlauch 2, ausgeführt ist, wobei die Lage der Schlauchachse 8 dieser beiden Schutzschläuche einen horizontalen Verlauf einnehmen soll, entlang derer sich die Schutzschläuche erstrecken. Der Abstandskörper 5, der eine Körperform nach der Fig. 4 besitzt, ist (nach der Fig. 3) einstückig ausgeführt, welcher zwischen dem ersten und zweiten Schutzschlauch 1, 2 angeordnet ist. Wie vorher angesprochen - verwendet diese Anordnung ein Abstandsteil 5, das die Gestalt eines Quaders besitzt, dessen Grund- und Deckfläche G, D ebenflächig (plan) ausgebildet sind. Dieser Quader besitzt jeweils zwei parallel angeordnete und sich gegenüber stehende Rechteck-Seitenflächen, deren Seitenkanten (aufgrund eines abweichenden Längen und Breitenmaßes) unterschiedliche Flächen eingrenzen.

Die Grund- und Deckfläche G, D sowie die Seitenflächen bilden einen Mantel (dieses quaderförmigen Körpers), wobei die Bereiche des Mantels, die von den zwei sich gegenüber stehenden Mantelflächen M1, M2 mit geringer Fläche verkörpert werden, konkav gewölbt sind.

Diese konkav gewölbten Mantelflächen M1, M2 des eingesetzten Abstandteiles 5, die (nach der Fig. 3) quer zur Schlauchachse 8 angeordnet sind und vertikal stehend mit den horizontal (in Richtung der Schlauchachse 8) verlaufenden Seitenkanten der Grund- und Deckfläche G, D verbunden sind, werden in einer hervorgehobenen Darstellung nach der Fig. 4 gezeigt, die (jeweils paarweise) dem ersten und zweiten nebengelegenen Schutzschlauch 1, 2 zugewandt sind. Dabei ist (allgemein betrachtet auf alle Schutzschläuche 1, 2, 3, n der Anordnung bezogen) die konkav gewölbte Mantelfläche M1, M2 dem betreffenden Durchmesser des einzelnen Schutzschlauches 1, 2 bzw. 2, 3 bis n angepasst, wobei dieser Schlauchdurchmesser durchaus unterschiedlich sein kann. Die einzelnen Mantelflächen M1, M2 mit konkaver Wölbung werden den radial geformten außenliegenden Schutzschlauch-Oberflächenabschnitten 6, 7 beispielsweise des ersten und zweiten Schutzschlauches 1, 2, die - wie erwähnt - ihnen gegenüberstehen, fest angeformt.

Nach der Fig. 5 bleibt die quaderförmige Körperform des Abstandteiles 5, die hinsichtlich der Fig. 4 mehrfach erwähnt wird, erhalten. Es wird eine konkav gewölbte Grund- und Deckfläche G, D gezeigt, die ebenso für die Anformung von beispielsweise eines ersten und zweiten Schutzschlauches 1, 2 bestimmt ist, allerdings für Schutzschläuche mit einem weitaus größeren Schlauchdurchmesser, als bisher vorgestellt.

In der Fig.7 wird die Darstellung des quaderförmigen Abstandsteils 5, welches hinsichtlich der Fig. 3 bereits vorgestellt wird, mit den Angaben, die sich auf die Quader-Kantenlänge b und Quader-Kantenbreite c dieses Körpers beziehen, ergänzt. Sofern nun das längsgestreckte Abstandteil 5 mittig der Quader-Kantenlänge b (an der Stelle: b/2) über die Quader-Kantenbreite c abgewinkelt wird, dermaßen, dass ein erster Winkel α von einem ersten und einem zweiten Schenkel S1, S2 eingeschlossen wird, erhält man einen gleichschenklig geformten Abstandskörper 5. In der Fig. 7a wird ein derartig geformter Abstandskörper 5 gezeigt, dessen Schenkel S1, S2 eine gleiche Materialstärke aufweisen und einen rechten Winkel einschließen. Denkbar wäre auch das zueinander Abwinkeln der Schenkel S1, S2 in einem Winkel α von 45° und 60° oder einem anderen bevorzugten Winkelmaß, wobei das umgesetzte Winkelmaß von dem Ort der vorgesehenen Befestigung an einer Struktur, beispielsweise der Flugzeugstruktur eines Flugzeuges, und in Korrelation von dem verfügbaren Raum, beispielsweise bei gewöhnlich vorhandenen beengten Raumverhältnissen im Flugzeuginneren, der mit dieser Schutzschlauch-Anordnung ausgeführten Schutzschlauch-Installation abhängig sein wird. Die Anformung der Schutzschläuche 1, 2 an den konkav geformten Schutzschlauch-Mantelbereichen M1, M2 wird in der vorbeschriebenen Art vorgenommen.

Es wird noch erwähnt, dass die Abwinklung des quaderförmigen Abstandsteils 5 natürlich auch außerhalb der Mitte der Quader-Kantenlänge b (an einer Stelle: größer oder kleiner b/2) über die Quader-Kantenbreite c geschehen kann, so dass man dann einen ungleichschenklig geformten Abstandskörper erhält, dessen Schenkel S1, S2 eine unterschiedliche Schenkellänge aufweisen werden.

In der Fig. 8 wird eine weitere Ausführung der Schutzschlauch-Anordnung vorgestellt, wonach das Abstandsteil 5 als ein U-förmig geformter Abstandskörper ausgebildet ist. Diese Ausführung berücksichtigt, dass die beiden Schenkel S3, S4 des U-Profils, die einer rechteckförmigen Auflagefläche A des U-Profils abstehend sind, längsseitig dieser Auflagefläche an den Rechtecklängskanten im zweiten Winkel β von etwa 120° abgewinkelt sind, wobei eine Abweichung des Winkelmaßes des zweiten Winkels β von größer oder kleiner 120° denkbar ist. Auch diese Ausführung wird in Abhängigkeit des Ortes der Befestigung und der dort bestehenden Raumverhältnisse eingesetzt. An den freien Enden eines dritten und vierten Schenkels S3, S4 wird in Kantenlängsrichtung der rechteckförmigen Auflagefläche A (in längsseitiger Richtung dieser reckeckförmigen Auflagefläche A) die Anformung von jeweils einem Schutzschlauch 1, 2 geschehen.

In der Fig. 9 wird eine Schutzschlauch-Anordnung nach der Fig. 1 mit zwei Schutzschläuchen 1, 2, die sich möglichenfalls hinsichtlich dem verwendeten Schlauchmaterial unterscheiden werden, in einer Seitenansicht gezeigt, wobei der nicht angeformte Schutzschlauch-Oberflächenabschnitt des ersten Schutzschlauches 1 von der erwähnten Folie oder dem genannten Gewebe 10, welche einseitig klebend und selbsthaltend ausgebildet sind, umgeben ist. Es wird vorgesehen, dass dem Schutzschlauch-Oberflächenabschnitt des ersten Schutzschlauches 1 ein weiterer Textilgewebeschlauch, der entlang seiner (nicht dargestellten) Schlauchachse geschlitzt ausgebildet ist, befestigt ist. Durch die geschlitzte Ausführung dieses Textilgewebeschlauches besteht die Möglichkeit, die Schlauchschlitzung radial zu öffnen und die selbsthaftend ausgebildete Oberfläche den Innenbereich der Schlauchwandung des Textilgewebeschlauches auf der Schlauchoberfläche des ersten Schutzschlauches 1 abzulegen und klebend zu befestigen. Außerdem kann man aus der Vorderansicht nach der Fig. 10 ersehen, dass dem schlauchangeformten quaderförmigen Abstandsteil 5 eine querliegend zur (nicht dargestellten) Schlauchachse respektive flächenmittig der Grund- und Deckfläche G, D des Abstandskörpers eine Aussparung 9, beispielsweise ein lochartigoder ein rechteck- oder quadratartiger Durchbruch, ausgenommen ist. Nach der Fig. 9 werden in Richtung der (nicht dargestellten) Schlauchachse der beiden Schutzschläuche 1, 2, die beispielsweise nach dem Vorbild der Figuren 1, 3, 4 und 6 an den sich gegenüberstehenden konkav gewölbten Mantelflächen M1, M2 des quaderförmigen Abstandskörpers 5 oder denkbar (hinsichtlich der Fig. 5) an der konkav gewölbten Grund- oder Deckfläche G, D des quaderförmigen Abstandskörpers 5 angeformt sind, mehrere derartige Aussparungen 9 vorgesehen, die zueinander im Abstand angeordnet sind. Diese Ausführung einer Schutzschlauch-Anordnung wird als alternative Lösungsmöglichkeit im Vergleich mit derjenigen Ausführung, welche mehrere zueinander beabstandete Abstandskörper 5 berücksichtigt, die (wie vorher erwähnt) zwischen zwei Schutzschläuchen 1 bis n angeordnet letzteren angeformt sind.

In den Figuren 11 und 12 wird eine weitere Ausführung einer Schutzschlauch-Anordnung vorgestellt, die sich kaum merklich hinsichtlich derjenigen Ausführung nach den Figuren 9 und 10 unterscheidet. Ein Unterschied fällt mit dem Wegfall des Textilgewebeschlauches auf, der auf dem nicht angeformten Schlauchbereich des ersten Schutzschlauches 1 (und ggf. auch zweiten Schutzschlauches 2) nunmehr keine Berücksichtigung finden wird.

Mit dem Einsatz eines Kunststoffschlauches, der beispielsweise bei beiden Schutzschläuchen 1 und 2 verwendet wird und ein PTFE-Schlauch nach NSA935805 mit den schlauchumfänglichen Erhöhungen 11 ist, wird ein weiterer Unterschied deutlich, wobei der Schlauchdurchmesser des ersten und zweiten Schutzschlauches 1, 2 gleich groß ist. Auch die Anordnung der Aussparungen 9 wird gleichermaßen berücksichtigt.

Es bleibt zu erwähnen, dass eine Herstellung der geschilderten Schutzschlauch-Anordnung mit allen vorgestellten Ausführungen aus einem Komplettteil [Schutzschla(e)uch(e) 1 bis n mit angeformtem(n) Abstandsteil(en) 5] von Vorteil sein wird. Das manuelle Anformen der konkav geformten Mantelbereiche M1 oder M2 des einzelnen Abstandteils 5 an den betreffenden Schutzschlauch-Oberflächenabschnitt 5, 6 oder m des einzelnen Schutzschlauches 1, 2, 3 oder (durch Kunststoffkleben oder-schweißen der Fügepartner an den betreffenden Oberflächen) wird aus Gründen der rationalen Arbeitsweise wahrscheinlich nur im Einzelfall (wenn überhaupt) entsprechende Berücksichtigung finden. Da scheint das Erwägen einer mechanischen Trennung des verwendeten Komplettteiles an der beabsichtigten Trennstelle, welche wegen der Anpassung an die örtlichen Gegebenheiten während der Schutzschlauch-Installation ggf. erforderlich ist, sinnvoller. Außerdem kann dieses Komplettteil mit beliebiger Schutzschlauchlänge kosten- und -platzmäßig die Lagerhaltung günstig beeinflussen. Weiterhin lässt sich auf die Oberfläche eines Komplettteiles sehr rationell ein kratzfester umweltbeständiger und / oder elektromagnetische Störungen oder sonstige Beeinflussungen abschirmender Überzug aufbringen. Letzterer wird durch einen metallen oder wenigstens mit Metallpartikeln durchsetzten Oberflächen-Auftrag realisiert.

### Bezugszeichen

- 1: erster Schutzschlauch
- 2: zweiter Schutzschlauch
- 3: dritter Schutzschlauch
- n: n-ter Schutzschlauch (von mehreren Schutzschläuchen)
- 4: Leitungen, elektrisch isoliert
- 5: Abstandsteil, quaderförmig
- 6, 7, m: Schutzschlauch-Oberflächenabschnitt
- 8: Schlauchachse
- 9: Aussparung(en)
- 10: Gewebe, einseitig klebend und selbsthaltend
- 11: Erhöhung(en), rohrförmig, schraubenartig gewunden
- a: gestreckte Schutzschlauchlänge
- b: Quader-Kantenlänge (des Abstandsteils 5)
- c: Quader-Kantenbreite (des Abstandsteils 5)
- A: Auflagefläche eines (dem Abstandsteil 5 integrierten) U-Profils
- D: Deckfläche (des quaderförmigen Abstandskörpers)
- G: Grundfläche (des quaderförmigen Abstandskörpers)
- M1, M2: Mantelbereich (derSchutzschläuche 1 bis n)
- S1: erster Schenkel (des abgewinkelt ausgeführten quaderförmigen Abstandskörpers)
- S2: zweiter Schenkel (des abgewinkelt ausgeführten quaderförmigen Abstandskörpers)
- α: erster (zwischen den Schenkeln S1 und S2 eingeschlossener) Winkel
- β: zweiter (zwischen der Auflagefläche A und einem Schenkel des U-Profils eingeschlossener) Winkel

## Patentansprüche

1. **Schutzschlauch-Anordnung für innenverlegte Leitungen im Flugzeug,** bestehend aus der Kombination von mehreren parallel angeordneten Schutzschläuchen (1, 2, 3, n), deren Querschnitt zur Aufnahme von isolierten elektrischen Leitungen (4) vorgesehen ist, und einem Abstandsteil (5), das zwischen zwei nebeneinander gelegenen Schutzschläuchen (1, 2, 3, n) positioniert ist und den sich gegenüberstehenden außenliegenden Schutzschlauch-Oberflächenabschnitten (6, 7, m) dieser Schutzschläuche (1, 2, 3, n) angeformt ist, wobei das Abstandteil (5) ein quaderförmiger Abstandskörper ist, dessen Grund- und Deckfläche (G, D) oder dessen sich gegenüber stehende Mantelflächen (M1, M2) konkav gewölbt sind, wobei die entsprechend paarweise gewölbten Körperflächen, die jeweils dem nebengelegenen Schutzschlauch (1, 2, 3, n) zugewandt sind, dem Durchmesser des einzelnen Schutzschlauches (1, 2, 3, n) angepasst ist,
**dadurch gekennzeichnet, dass** das Abstandteil (5) ein gleichschenklig geformter Abstandskörper ist, der mittig der und quer zur Quader-Kantenlänge (b) abgewinkelt ist, oder ein ungleichschenklig geformter Abstandskörper ist, der außerhalb der Mitte der Quader-Kantenlänge (b) und quer zur Quader-Kantenlänge (b) abgewinkelt ist.

2. **Schutzschlauch-Anordnung** nach Anspruch 1, **dadurch gekennzeichnet, dass** das Abstandsteil (5) jeweils zwischen einem ersten und einem zweiten Schutzschlauch (1, 2) und weiteren Schutzschläuchen (3, n), die nebengelegen dem zweiten Schutzschlauch (2) quer zur Schutzschlauchachse (8) der Schutzschläuche (1, 2, 3, n) fortgesetzt bis zu einem abschließenden n-ten Schutzschlauch (n) benachbart positioniert sind, angeordnet ist, das entlang der gestreckten Länge (a) der Schutzschläuche (1, 2, 3, n) an den sich gegenüberstehenden außenliegenden Schutzschlauch-Oberflächenabschnitten (6, 7, m) angeformt ist.

3. **Schutzschlauch-Anordnung** nach Anspruch 1, **dadurch gekennzeichnet, dass** mehrere Abstandteile (5) zwischen zwei nebeneinander gelegenen Schutzschläuchen (1, 2, 3, n) positioniert sind, die zueinander im definierten Abstand entlang der gestreckten Länge (a) der Schutzschläuche (1, 2, 3, n) an den sich gegenüberstehenden außenliegenden Schutzschlauch-Oberflächenabschnitten (6, 7, m) angeformt sind.

4. **Schutzschlauch-Anordnung** nach den Ansprüchen 1, **dadurch gekennzeichnet, dass** das Abstandsteil (5) aus zwei abgewinkelten Schenkeln (S1, S2) gleicher Materialstärke integriert ist, die in einem Winkel (α) zueinander abgewinkelt sind.

5. **Schutzschlauch-Anordnung** nach Anspruch 4, **dadurch gekennzeichnet, dass** der Winkel (α) ein 45°-Winkel oder ein 60°-Winkel ist.

6. **Schutzschlauch-Anordnung** nach den Ansprüchen 1, **dadurch gekennzeichnet, dass** das Abstandsteil (5) ein U-förmig geformter Abstandskörper ist, wobei die Schenkel (S3, S4) des U-Profils, die einer rechteckförmigen Auflagefläche (A) des U-Profils abstehend sind, längsseitig der Auflagefläche an den Rechtecklängskanten im Winkel (β) von etwa 120° abgewinkelt sind.

7. **Schutzschlauch-Anordnung** nach Anspruch 1, **dadurch gekennzeichnet, dass** dem Abstandskörper (5) flächenmittig der Grund- und Deckfläche (G, D) mehrere Aussparungen (9) ausgenommen sind, die zueinander beabstandet und in Richtung der **Quader-Längskanten** verlaufend angeordnet sind.

8. **Schutzschlauch-Anordnung** nach Anspruch 1, **dadurch gekennzeichnet, dass** dem nicht angeformten außenliegenden Schutzschlauch-Oberflächenabschnitt des ersten und / oder n-ten Schutzschlauches (1, n) eine Folie oder ein Gewebe (10), welche einseitig klebend und selbsthaltend ausgebildet sind, befestigt ist.

## Claims

1. **Protective hose arrangement for cables laid inside an aircraft,** consisting of the combination of a plurality of protective hoses (1, 2, 3, n) which are arranged in parallel and the cross section of which is intended to accommodate insulated electric cables (4), and a spacer part (5) which is positioned between two protective hoses (1, 2, 3, n) disposed side by side and is formed onto the mutually opposite outer protective hose surface portions (6, 7, m) of these protective hoses (1, 2, 3, n), wherein the spacer part (5) is a cuboid spacer body whose base and top surface (G, D) or whose mutually opposite circumferential surfaces (M1, M2) are arched in a concave manner, wherein the body surfaces, accordingly arched in pairs, which in each case face the adjacent protective hose (1, 2, 3, n) are adapted to the diameter of the individual protective hose (1, 2, 3, n),
**characterised in that** the spacer part (5) is a spacer body formed with equal sides which is angled centrally and transversely relative to the cuboid edge length (b), or is a spacer body formed with unequal sides which is angled outside of the centre of the cuboid edge length (b) and transversely relative to the cuboid edge length (b).

2. **Protective hose arrangement** according to Claim 1,
**characterised in that** the spacer part (5) is in each case arranged between a first and a second protective hose (1, 2) and further protective hoses (3, n) which are positioned adjacent to the second protective hose (2) transversely to the protective hose axis (8) of the protective hoses (1, 2, 3, n) continuing up to a final n^{th} protective hose (n), which part is formed onto the mutually opposite outer protective hose surface portions (6, 7, m) along the straight length (a) of the protective hoses (1, 2, 3, n).

3. **Protective hose arrangement** according to Claim 1,
**characterised in that** a plurality of spacer parts (5) are positioned between two protective hoses (1, 2, 3, n) disposed side by side and are formed onto the mutually opposite outer protective hose surface portions (6, 7, m) at a defined spacing from one another along the straight length (a) of the protective hoses (1, 2, 3, n).

4. **Protective hose arrangement** according to Claim 1,
**characterised in that** the spacer part (5) is integrated from two angled sides (S1, S2) which are of the same material thickness and angled at an angle (α) relative to one another.

5. **Protective hose arrangement** according to Claim 4,
**characterised in that** the angle (α) is a 45° angle or a 60° angle.

6. **Protective hose arrangement** according to Claim 1,
**characterised in that** the spacer part (5) is a spacer body formed into a U-shape, wherein the sides (S3, S4) of the U-profile, which project from a rectangular bearing surface (A) of the U-profile, are angled alongside the bearing surface at the longitudinal edges of the rectangle at an angle (β) of approximately 120°.

7. **Protective hose arrangement** according to Claim 1,
**characterised in that** a plurality of recesses (9) are made in the central area of the base and top surface (G, D), which recesses are spaced apart and arranged so as to extend in the direction of the longitudinal edges of the cuboid.

8. **Protective hose arrangement** according to Claim 1,
**characterised in that** a film or a fabric (10), which is adhesive and self-retaining on one side, is secured to the outer protective hose surface portion of the first and/or n^{th} protective hose (1, n) which is not formed on.

## Revendications

1. Système de tuyaux de protection de câbles disposés à l'intérieur d'un aéronef, constitué par la combinaison de plusieurs tuyaux de protection (1, 2, 3, n) disposés en parallèle et dont les sections sont prévues pour accueillir des câbles électriques (4) et d'une partie d'espacement (5) qui est positionnée entre deux tuyaux de protection (1, 2, 3, n) disposés côte à côte et moulée sur les segments de surface externe (6, 7, m) en regard des tubes de protection (1, 2, 3, n) correspondants, cette partie d'espacement (5) étant un corps d'espacement rectangulaire dont la surface de base et la surface de couverture (G, D) ou les surfaces latérales (M1, M2) sont de forme concave, et ces paires de surfaces situées en regard des tuyaux de protection (1, 2, 3, n) disposées côte à côte ont leurs diamètres adaptés à ceux de ces tuyaux individuels de protection, **caractérisé en ce que** la partie d'espacement (5) est soit un corps moulé, à branches égales, coudé selon une ligne perpendiculaire au long côté (b) du rectangle et passant au milieu de ce côté, soit un corps moulé à branches inégales, coudé selon une ligne perpendiculaire au long côté (b) du rectangle et passant en dehors du milieu de ce côté.

2. Système de tuyaux de protection selon la revendication 1, **caractérisé en ce que** la partie d'espacement (5) est située chaque fois entre un premier et un deuxième tuyau de protection (1, 2) et entre d'autres tuyaux de protection (3, n) qui font suite à ce deuxième tuyau selon une direction perpendiculaire à l'axe (8) des tuyaux de protection (1, 2, 3, n) jusqu'au tuyau de protection final (n), cette partie d'espacement étant, sur toute la longueur (a) des tuyaux de protection (1, 2, 3, n), moulée sur les segments de surface externe (6, 7, m) se faisant face d'un tuyau à l'autre.

3. Système de tuyaux de protection selon la revendication 1, **caractérisé en ce que** plusieurs parties d'espacement (5) sont disposées entre deux tuyaux de protection (1, 2, 3, n) disposés côte à côte et, avec des espacements définis entre eux sur la longueur (a) du tuyau de protection (1, 2, 3, n) correspondant, sont moulées sur les segments de surface externe (6, 7, m) se faisant face d'un tuyau à l'autre.

4. Système de tuyaux de protection selon la revendication 1, **caractérisé en ce que** la partie d'espacement (5) est constituée de deux branches (S1, S2) de même épaisseur, formant entre elles un angle (α).

5. Système de tuyaux de protection selon la revendication 4, **caractérisé en ce que** l'angle (α) est de 40° ou de 60°.

6. Système de tuyaux de protection selon la revendication 1, **caractérisé en ce que** la partie d'espacement (5) est un corps moulé en forme d'U dans lequel les ailes (53, 54) du profilé en U partent d'une portée d'appui (A) rectangulaire de ce profilé en faisant avec cette portée, le long des bords longitudinaux de celle-ci, un angle (β) d'environ 120°.

7. Système de tuyaux de protection selon la revendication 1, **caractérisé en ce que** le corps d'espacement (5) présente, au milieu de ses surfaces de base et de couverture (G, D) plusieurs évidements (9) espacés les uns des autres et orientés comme les bords longitudinaux du rectangle.

8. Système de tuyaux de protection selon la revendication 1, **caractérisé en ce qu'**à la partie, sur laquelle rien n'est moulé, de la surface externe du premier et/ou du énième tuyau de protection (1, n) est fixée une pellicule ou un tissu (10), qui est autoadhésif d'un côté.
